# EUROPEAN PATENT SPECIFICATION

(11) **EP 2 258 611 B1**
(45) Date of publication and mention of the grant of the patent: **23.07.2014**
(21) Application number: 09727322.1
(22) Date of filing: 18.02.2009
(51) Int. Cl.: B62J 17/00, B62J 17/02, B62J 17/06

(54) **Scooter-type vehicle**
Rollerartiges Fahrzeug
Véhicule de type scooter

(30) Priority: 31.03.2008 JP 2008094015
(43) Date of publication of application: 08.12.2010
(73) Proprietor: Honda Motor Co., Ltd., Minato-ku Tokyo 107-8556 (JP)
(72) Inventor: PACIELO, Nicola, I-00143 Roma (IT); GILIBERTI, Gian Carlo, I-00143 Roma (IT)
(74) Representative: Ilgart, Jean-Christophe
(86) International application number: PCT/JP2009/052783
(87) International publication number: WO 2009/122800

(56) References cited:
- JP-A- 5 305 890
- JP-A- 10 167 147
- JP-A- 2000 337 146
- JP-A- 2002 173 069
- JP-A- 2002 173 072
- JP-A- 2005 219 743
- JP-B2- 3 791 897
- JP-U- 60 043 491
- JP-U- 60 072 384
- JP-U- 61 010 236

## Description

### BACKGROUND OF THE INVENTION

### 1. Field of the Invention

The present invention relates to the air guide structure of a scooter-type vehicle in which a radiator is housed in the inside of a front vehicle-body cover, a traveling air is taken into the radiator from a front side of the radiator and is cooled, and warmed discharge air is discharged from air discharge openings formed in left and right sides of a rear side surface of the vehicle-body cover behind the radiator, and more particularly to the air guide structure of a scooter-type vehicle in which a leg shield is formed in an approximately L-shape (approximately boomerang shape) as viewed in the side view thus enhancing foot resting property as well as a cooling efficiency.

In this application, front/rear sides, left/right sides, and upper/lower sides of vehicle mounting parts are determined using an advancing direction of a vehicle in a vehicle mounted state as references. Further, with respect to inside and outside, a side which constitutes a vehicle-body center side in the above-mentioned vehicle mounting state is referred to as inside, and a side opposite to the inside is referred to as an outside.

### 2. Description of the Related Art

The following patent document 1 discloses a scooter-type vehicle according to the preamble of claim 1, in which a radiator is arranged in front of a head pipe, a traveling air which is introduced from a front side of the radiator passes the radiator, and is discharged from air discharge openings arranged on side portions of a leg shield, and the leg shield is formed in an approximately L-shape as viewed in a side view.

[Patent document 1] Japanese Patent Publication 3791897

In the above-mentioned scooter-type vehicle having the conventional structure, to enhance a cooling efficiency, it is necessary to make the flow of warmed discharge air in the inside of the front vehicle-body cover smooth. However, in this type of vehicle, a head pipe which becomes the reference in a layout of the vehicle body is positioned in the inside of the front vehicle-body cover and hence, it is difficult to freely move the position of the head pipe only for the purpose of acquiring the favorable flow of warmed discharge air. As a result, restrictions are liable to be imposed on the layout of the air guide structure of warmed discharge air and hence, it is difficult to make a design change which largely changes the air discharge direction. Accordingly, there has been a demand for a cooling system which can acquire a more efficient traveling air by increasing a traveling air quantity without largely changing the flow of the traveling air. And JP-60 072384 -U and JP-60 043491-U disclose other arrangements for a scooter vehicle, comprising a front air intake opening at the front of the front cover and two air discharge openings at the sides of the front cover.

### SUMMARY OF THE INVENTION

To overcome the above-mentioned drawbacks, the invention is directed to a scooter-type vehicle having an air guide structure according to claim 1.

A first particular aspect of claim 1 is that the front edges and the rear edges of the air discharge openings below the portion of the air discharge openings which overlaps with the radiator are inclined obliquely in the rearward and downward direction.

A second particular aspect of claim 1 is that the upper portion and the lower portion of the front edge and the rear edge of the air discharge openings are connected with each other in a curved shape.

A third particular aspect of claim 1 is that the scooter-type vehicle includes a seat and a leg shield which covers the legs of a rider who sits on the seat from a front side, the air discharge openings are formed in the leg shield and are arranged at an approximately equal height as an upper surface of the seat, and a back surface side of the leg shield is formed in a frontward recessed shape along the air discharge openings as viewed in a side view.

The invention described in claim 3 is, in the constitution described in any one of claims 1 or 2, characterized in that a louver which includes a plurality of blades extending in the longitudinal direction of the vehicle and is mounted in each air discharge opening, and a wall thickness of each blade is set to a small value on an inner side thereof, and increased on an outer side thereof.

According to the invention described in claim 1, a longitudinal width of the vertically elongated air discharge opening is enlarged longitudinally between the radiator and the head pipe, and the direction of the air discharge opening is directed rearward more gently than the radiator. Accordingly, it is possible to efficiently discharge the discharge air while enlarging a discharge air quantity and hence, a cooling efficiency can be enhanced.

According to the first particular aspect, the discharge air quantity can be increased by further enlarging a discharge air opening area.

According to the second particular aspect, the traveling air can be smoothly discharged thus enhancing [an] air discharge efficiency by making use of a flow straightening effect.

According to the third particular aspect, by recessing the leg shield along the air discharge opening, the interference of a knee of a rider with the leg shield can be suppressed thus enhancing riding comfortability of the rider.

According to the invention described in claim 3, by decreasing the thickness of the louver on the inner side of the air discharge opening while ensuring a strength of the louver by increasing the thickness of the louver on the outer side of the air discharge opening, the obstruction of the flow of the discharge air by the louver can be prevented as much as possible thus suppressing lowering of a discharge efficiency by the louver.

### BRIEF DESCRIPTION OF THE DRAWINGS

Fig. 1 is a side view showing an appearance of a scooter-type motorcycle according to an embodiment of the present invention;
Fig. 2 is a view showing an inner portion of the scooter-type motorcycle in Fig. 1 while drawing a vehicle-body cover and the like with an imaginary line;
Fig. 3 is a perspective view of a portion of a floor portion;
Fig. 4 is a side view of a front portion of a vehicle body showing a state in which the front portion of a vehicle body is covered with a front vehicle-body cover;
Fig. 5 is a view showing a state in which a front vehicle-body cover is drawn with an imaginary line;
Fig. 6 is an enlarged view of an air discharge opening;
Fig. 7 is a cross-sectional view taken along a line 7-7 in Fig. 4;
Fig. 8 is a view showing shapes of side surfaces of respective constitutional parts of a front vehicle-body cover in an exploded manner;
Fig. 9 is a view showing a front shape and a back shape of the vehicle-body cover;
Fig. 10 is a perspective view showing a small assembled portion of a radiator;
Fig. 11 is a front view of the small assembled portion of the radiator;
Fig. 12 is a side view of the small assembled portion of the radiator;
Fig. 13 is a side view of an air discharge guide;
Fig. 14 is a front view of the air discharge guide;
Fig. 15 is a view showing a head light portion from a front side;
Fig. 16 is a view showing a handle cover from a rear side;
Fig. 17 is a front view of a head light;
Fig. 18 is a transverse cross-sectional view of the head light taken along a line 18-18 in Fig. 17;
Fig. 19 is a view showing the aiming adjustment in the lateral direction;
Fig. 20 is a view as viewed in the direction indicated by an arrow 20 in Fig. 17;
Fig. 21 is a cross-sectional view taken along a line 21-21 in Fig. 20; and
Fig. 22 is a view showing the aiming adjustment in the vertical direction.

### DETAILED DESCRIPTION OF THE PREFERRED EMBODIMENTS

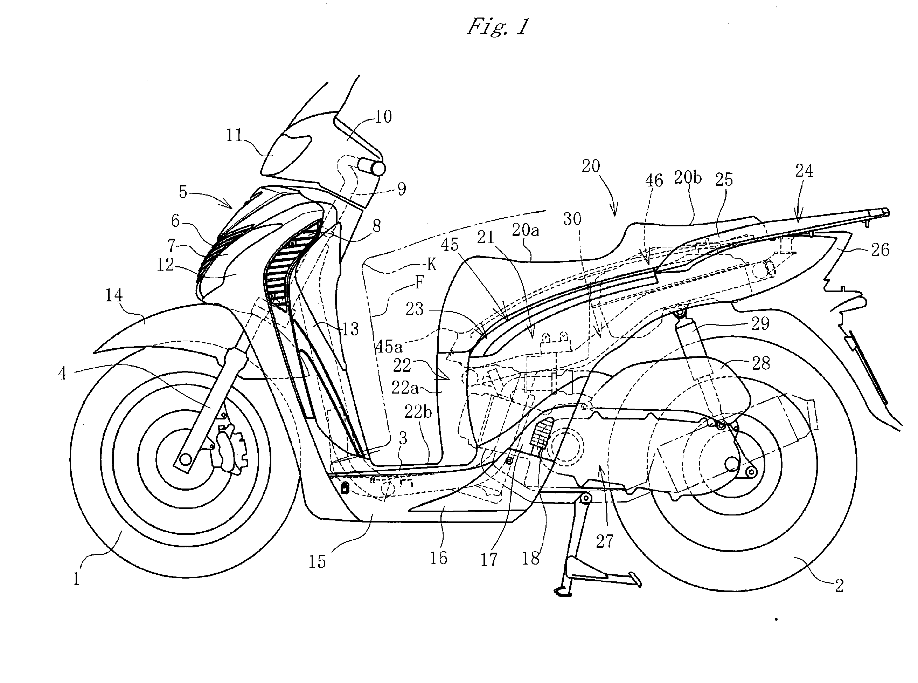

Hereinafter, one embodiment of a scooter-type vehicle is explained in conjunction with drawings. Fig. 1 is a side view of an appearance of the scooter-type motorcycle according to an embodiment of the present invention. Here, the scooter-type motorcycle is one example of a saddle-riding type vehicle, and includes a low-floor-type step floor 3 arranged between a front wheel 1 and a rear wheel 2. An upper portion of a front fork 4 which supports left and right sides of the front wheel 1 is covered with a resin-made front vehicle-body cover 5. Numeral 6 indicates a front louver, numeral 7 indicates a front winker, and numeral 8 indicates air discharge openings. Traveling air is taken into the inside of the front vehicle-body cover 5 from the front louver 6 which constitutes an air intake opening of the present invention, and warmed discharge air which is produced by cooling a radiator described later is discharged toward sides of a vehicle body from the air discharge openings 8 formed in side surfaces of the front vehicle-body cover 5. Numeral 9 indicates a handle, numeral 10 indicates a handle cover, and numeral 11 indicates a head light.

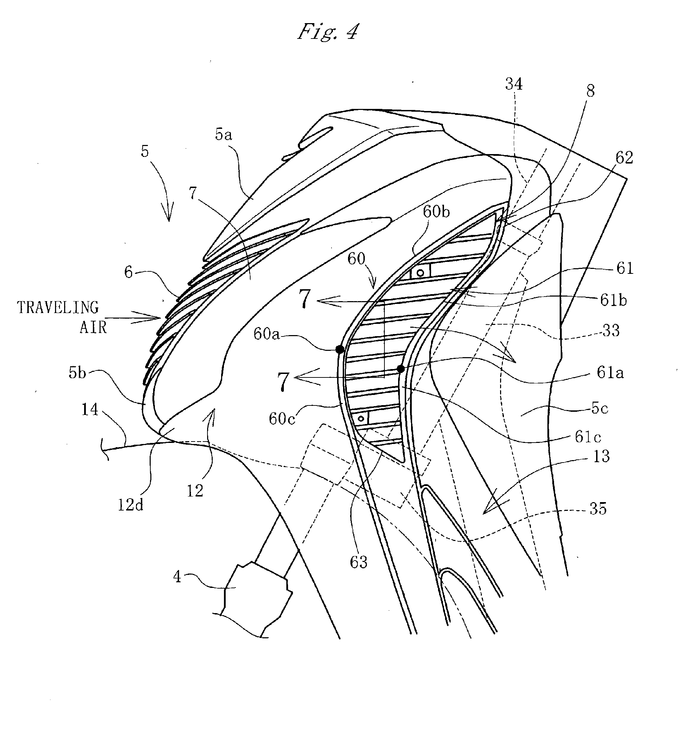

The front vehicle-body cover 5 includes a front-side front cover 12 and a rear-side leg shield 13 which are combined with each other in the longitudinal direction. The front cover 12 is formed in an approximately L-shape as viewed in a side view, and a front nose 12d which constitutes an intermediate portion of the front cover 12 in the vertical direction (see Fig. 4) projects frontward at a portion above a front fender 14. A lower end portion of the front cover 12 extends toward a rear portion of the front wheel 1, and is connected to a front end portion of a floor under skirt 15 which covers the step floor 3 from below. An under cover 16 which is a part separate from the floor under skirt 15 is detachably mounted on a rear side surface of the floor under skirt 15. The floor under skirt 15 and the under cover 16 are also made of a resin. A lower end portion of a step holder 17 is connected to an upper edge of a rear end portion of the under cover 16. A pillion step 18 which can be tilted up and down is arranged on a side surface of the step holder 17.

The leg shield 13 is a member which covers a front portion of a leg portion F of a rider who places his/her legs on the step floor 3. The leg shield 13 includes a portion having an approximately L-shape corresponding to the front cover 12 as viewed in a side view, and the air discharge openings 8 are formed in side surfaces of the leg shield 13 in the vicinity of a bent portion which projects frontward (portions in the vicinity of most front portion 13b). A lower end portion of the leg shield 13 is engaged with a front portion of the step floor 3. A seat 20 for two-men riding is arranged behind the leg shield 13 with the step floor 3 therebetween, a height of a front end portion of the seat 20 is approximately equal to a position of the air discharge openings 8, and the seat 20 is positioned behind the air discharge openings 8. Left and right sides of the seat 20 are covered with the rear cover 21 from below. A front portion of the seat 20 is covered with a center cover 22. An engine is surrounded by the front portion of the rear cover 21 and the center cover 22. The rear cover 21 and the center cover 22 are made of a resin.

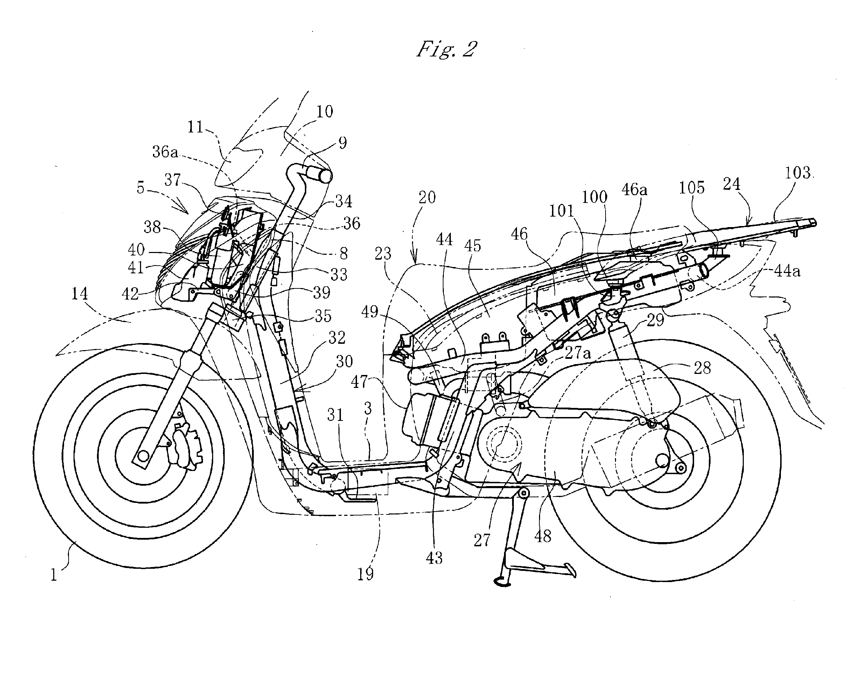

The center cover 22 includes a vertically-extending portion 22a and a leg portion 22b which is bent in the substantially horizontal direction from a lower end of the vertically-extending portion 22a and extends in the frontward direction. The vertically-extending portion 22a constitutes a maintenance lid of the engine, and a support portion [45a] of a hinge to which a front end portion of the seat 20 is rotatably joined is housed in the inside of an upper end portion of the vertically-extending portion 22a. The leg portion 22b constitutes a maintenance lid which covers a maintenance opening (being omitted from the drawing) formed in the step floor 3 in an openable and closeable manner thus allowing the maintenance with respect to the battery 19 (Fig. 2) and the like which are supported below the leg portion 22b.

Between the seat 20 and the rear cover 21, a substantially strip-shaped garnish 23 is arranged, and the garnish 23 covers a portion which is formed between an upper edge portion of a storing box 45 described later and an upper edge portion of the rear cover 21 and extends in the longitudinal direction in a substantially strip-shaped manner. The garnish 23 extends over a boundary portion between a front seat 20a and a rear seat 20b and extends to a portion below the rear seat 20b in the vicinity of the boundary portion, and a distal end portion of a grip portion 25 which constitutes a portion of a rear carrier 24 is arranged in the vicinity of a rear end portion of the garnish 23. By painting the garnish 23 and the rear carrier 24 with the same metallic color thus providing the appearance having a sense of integrity to the vehicle, the garnish 23 and the grip portion 25 appear as if the garnish 23 is continuously formed with the grip portion 25.

Numeral 26 indicates a tail lamp unit which is mounted on a rear end portion of the rear cover 21, numeral 27 indicates a swing-type power unit, numeral 28 indicates an air cleaner, and numeral 29 indicates a rear cushion.

Fig. 2 is a view showing the internal structure of the vehicle body frame 30 and the like in a state that the vehicle body cover and the like shown in Fig. 1 are indicated by imaginary lines. The vehicle body frame 30 includes a floor portion 31 which supports the step floor 3. A longitudinally-intermediate portion of the floor portion 31 constitutes a substantially horizontal portion, and a front end portion of the floor portion 31 is raised by being bent upwardly and is connected to a lower portion of a down portion 32 which is arranged in an inclined manner while vertically extending along the vehicle-body center in a single manner. The head pipe 33 is supported on a distal end (upper end) of the down portion 32, and a handle shaft 34 is rotatably supported on the head pipe 33. The handle shaft 34 has a lower end thereof connected with the front fork 4 by way of a bottom bridge 35 and has an upper end thereof connected with the handle 9.

Numeral 36 indicates a stay which projects obliquely in the upward and frontward direction from a vertically intermediate portion of the head pipe 33, and the stay 36 supports a horn 37. A radiator 38 is positioned below the horn 37 and in front of the head pipe 33, and is supported on brackets 36a projecting toward left and right sides at a distal end portion of the stay 36. Numeral 39 indicates a bracket mounted on a lower portion of a front surface of the head pipe 33, numeral 40 indicates an air discharge guide, and numeral 41 indicates a reserve tank of a radiator liquid. The reserve tank 41 is supported on the head pipe 33 by way of a stay 42, the bracket 39 and the like.

The horn 37, the radiator 38 and the reserve tank 41 are arranged in approximately steps as viewed in a side view such that these parts project frontward while gradually lowering heights thereof frontward in conformity with a shape of a front portion of the front vehicle-body cover 5.

A rear portion of the floor portion 31 forms a pillar portion 43 which is raised by being bent upwardly, and a front end portion of a rear frame 44 is supported on an upper end of the pillar portion 43. A resin-made storing box 45 which is opened upwardly is supported on a front portion of the rear frame 44, and a fuel tank 46 is supported on the rear frame 44 behind the storing box 45. An upper portion of the storing box 45 and an upper portion of the fuel tank 46 are covered with an openable/closeable seat 20, and by opening the seat 20, articles can be put into or taken out from the inside of the storing box 45 and oil can be fed to the fuel tank 46. Symbol 46a indicates an oil filling cap.

A swing-type power unit 27 is swingably supported on the rear frame 44. The swing-type power unit 27 is a unitary body formed of an engine 47 and a transmission 48. The swing-type power unit 27 is swingably supported on the rear frame 44 in the vicinity of a connecting portion thereof with the pillar portion 43 by way of a link mechanism 27a at a portion in the vicinity of the engine 47.

A rear wheel 2 is supported on a rear end portion of the transmission 48, and a rear cushion unit 29 is provided between the rear end portion of the transmission 48 and a rear end portion of the rear frame 44. The engine 47 is arranged on a substantially horizontal state below a front end portion of the rear frame 44 which projects frontward from an upper end of the pillar portion 43, air is supplied to an intake port of the engine 47 from an air cleaner 28 arranged behind the engine 47, and fuel is supplied to the engine 47 from an electronic fuel injection device 49.

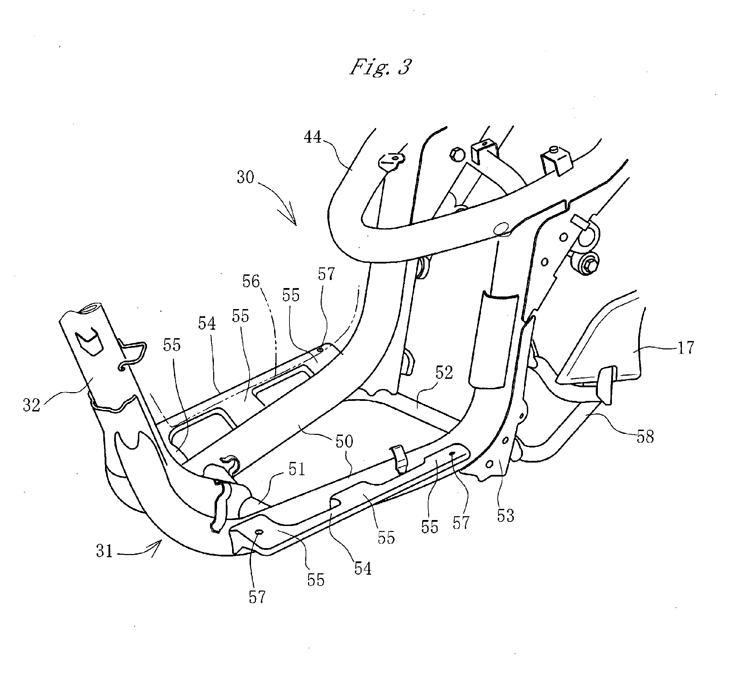

Fig. 3 is a perspective view of the floor portion 31. The floor portion 31 includes a pair of left and right pipe members 50 which has front and rear portions thereof bent upwardly, and front and rear portions of horizontal portions of the respective pipe members 50 are connected with each other by cross pipes 51, 52. An intermediate portion of the front-side cross pipe 51 is welded to a lower end portion of the down portion 32, and the rear-side cross pipe 52 is welded to a member arranged between lower end portions of brackets 53 welded to the left and right pillar portions 43. Further, a metal-made plate-shaped support stay 54 is welded to outer side surfaces of the respective horizontal portions of the left and right pipe members 50. The support stays 54 extend in the longitudinal direction along the horizontal portions, project outwardly, and support the step floor 3 on upper surfaces thereof. The support stay 54 is inclined to set a distal end side thereof higher than other parts, and an upper surface of the distal end side of the support stay 54 has a height substantially equal to a height of an upper surface of the horizontal portion of the pipe member 50.

Each support stay 54 includes projections 55 which project toward the pipe member 50 side at three portions thereof consisting of a front end, a rear end and a center portion, and the respective distal end portions are brought into contact with and are welded to a side surface of the pipe member 50 and hence, the respective support stays 54 are joined to the pipe member 50 at three portions in the longitudinal direction by welding. Numeral 56 indicates a group of cables which are arranged by making use of the support stay 54 and are supported on a lower surface of the support stay 54. Numeral 57 indicates a mounting portion of the step floor 3.

Due to such constitution, with the use of the support stay 54 formed of the plate-shaped member, the floor portion 31 can acquire a high rigidity and becomes light-weighted. Further, by forming the support stay 54 in a plate shape, the group of cables 56 can be easily supported by the support stay 54.

The rear frame 44 is a pipe member having an approximately U shape as viewed in a plan view, wherein a front end portion of the rear frame 44 is bent and a pair of left and right portions extends rearward. Respective rear end portions of the left and right pipe members are connected with each other by a cross pipe 44a (Fig. 2).

Symbol 58 indicates a step frame which projects sideward from a rear portion of the floor portion 31, and the step frame 58 supports the pillion step 18 (Fig. 1).

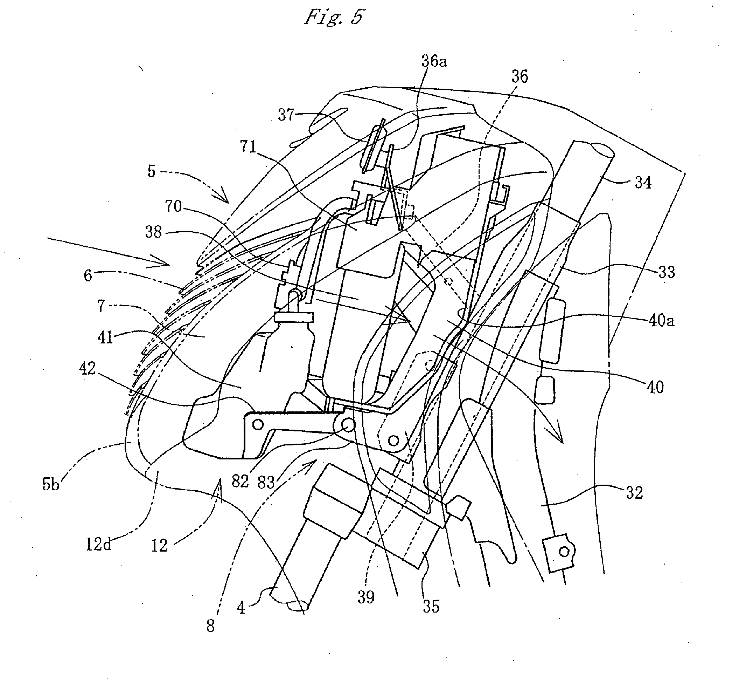

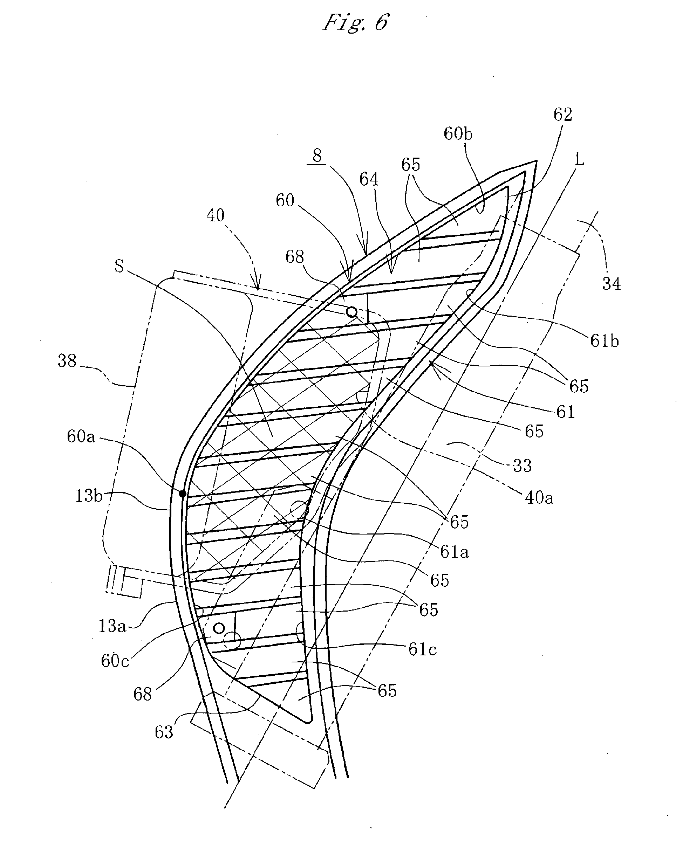

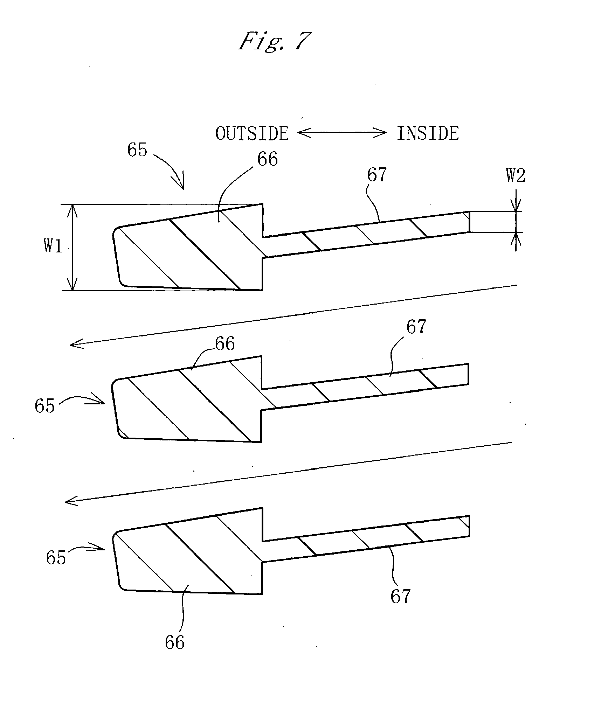

Next, the air discharge opening 8 is explained in detail. Fig. 4 is a side view of a portion of a front portion of the vehicle body in the vicinity of the air discharge opening 8, and shows a state in which the air discharge opening 8 is covered with the front vehicle-body cover 5. Fig. 5 shows a state in which the inner structure of the motorcycle is shown while drawing the front vehicle-body cover 5 with an imaginary line. Fig. 6 is an enlarged view of the air discharge openings 8, and Fig. 7 is a cross-sectional view taken along a line 7-7 in Fig. 4.

As can be understood from these drawings, the air discharge opening 8 is arranged at a position where a portion of the air discharge opening 8 overlaps with the head pipe 33 as viewed in a side view, and is positioned behind the radiator 38.

The air discharge opening 8 is formed in an approximately boomerang shape, wherein a front edge portion 60 and a rear edge portion 61 respectively form curved lines which are bent in a similarly approximately L-shape (approximately boomerang shape, this expression being used in the same manner), and the front edge portion 60 and the rear edge portion 61 are continuously formed with each other at an upper end portion 62 and a lower end portion 63 of the air discharge opening 8. The upper end portion 62 also constitutes a rear end portion.

The front edge portion 60 and the rear edge portion 61 respectively include upper portions 60b, 61b and lower portions 60c, 61c while sandwiching most front portions 60a, 61a therebetween. The most front portions 60a, 61a constitute frontward projecting bent portions of the leg shield 13 having approximately L-shape as viewed in a side view.

By forming the leg shield 13 in an approximately L-shape thus recessing the leg shield 13 frontward along the air discharge opening 8 in this manner, a sufficient space can be formed between the leg shield 13 and a knee K of a rider (see Fig. 1). Accordingly, the bent portion of the leg shield 13 is positioned in front of a front end portion of the seat 20 (see Fig. 1) and hence, the knee K and a leg F can be freely moved thus suppressing the interference of the knee K of the rider with the leg shield whereby comfortability of the rider can be enhanced. Further, by forming the air discharge opening 8 in an approximately boomerang shape, a cooling efficiency can be enhanced thus realizing both of the enhancement of comfortability and the enhancement of cooling efficiency.

With respect to the front edge portion 60 of the air discharge opening 8, the upper portion 60b and the lower portion 60c are connected with each other by the round-shaped most front portion 60a. The rear edge portion 61 is also configured such that the upper portion 61b and the lower portion 61c are connected with each other by the round-shaped most front portion 61a. However, the most front portion 61a has a larger curvature than the most front portion 60a and hence, a distance between the front edge portion 60 and the rear edge portion 61 become a widest between the most front portions 60a, 61a and is gradually narrowed toward an upper end and a lower end of the air discharge opening 8.

Further, the upper portion side of the air discharge opening 8 extends rearward in the oblique and upward direction, and a length of the upper portion side of the air discharge opening 8 is set larger than a length of the lower portion side of air discharge opening 8. In other words, the upper portion 60b of the front edge portion 60 is set larger than the lower portion 60c in length, and the upper portion 61b of the rear edge portion 61 is set larger than the lower portion 61c in length. The lower portion side of the air discharge opening 8 extends rearward in the oblique and downward direction. By forming the air discharge opening 8 in the above-mentioned shape, it is possible to make the flow of the discharge air smooth.

Further, by connecting the upper and lower portions of the air discharge opening 8 by the round-shaped portion, the traveling air can be straightened to be discharged smoothly and hence, air discharge efficiency can be enhanced due to such a straightening effect.

Further, a longitudinal width of the vertically elongated air discharge opening 8 is enlarged longitudinally between the radiator 38 and the head pipe 33, and the direction of the air discharge opening 8 is directed rearward more gently than the radiator 38 and hence, a discharge air opening area can be enlarged more thus increasing an air discharge quantity whereby the discharge air can be efficiently discharged while increasing the air discharge quantity thus enhancing a cooling efficiency.

As shown in Fig. 6, an upper-portion-61b side of the rear edge portion 61 extends along the head pipe 33 such that a portion of the upper-portion-61b side overlaps with the head pipe 33 as viewed in a side view, and is arranged approximately parallel to an axis L of the head pipe 33.

Fig. 6 is a view which schematically shows the relationship between the air discharge opening and main members out of members which are arranged around the air discharge opening in a simplified manner. The air discharge opening 8 partially overlaps with a side-surface opening 40a of an air discharge guide 40 which is arranged behind the radiator 38 as viewed in a side view, and the air discharge opening 8 discharges the discharge air which flows outward from the side-surface opening 40a to the outside. A portion indicated by hatching which is an overlapping portion of the side-surface opening 40a and the air discharge opening 8 defines a substantial opening area S. The larger the substantial opening area S, the smoother the discharge air flows. However, this substantial opening area S cannot be increased indefinitely, and is restricted by a shape of the leg shield 13 or the like. In this embodiment, the substantial opening area S can be ensured as large as possible by adopting the boomerang shape and by determining the particular positional relationship between the head pipe 33 and the air discharge guide 40.

An air discharge opening louver 64 is provided to the air discharge opening 8. As shown in Fig. 7, the air discharge opening louver 64 is constituted of a plurality of blades 65 having a strip plate shape which is arranged parallel to each other with a distance therebetween. The blade 65 has a large width at a distal end portion 66 thereof, wherein a width W1 of the distal end portion 66 is set larger than a width W2 of an inner side 67 (W1>W2) . By increasing the rigidity of an outer portion which requires the largest rigidity and decreasing a thickness of the inner portion 67 of the blade 65 in this manner, an inner space can be broadened so as to expand the inner space which is requested to reduce the ventilation resistance whereby the acquisition of the sufficient rigidity and the assurance of an air discharge space can be realized.

Accordingly, it is possible to prevent the obstruction of the flow of warmed discharge air as much as possible thus suppressing the lowering of air discharge efficiency caused by the louver while sufficiently ensuring the rigidity of the louver 64.

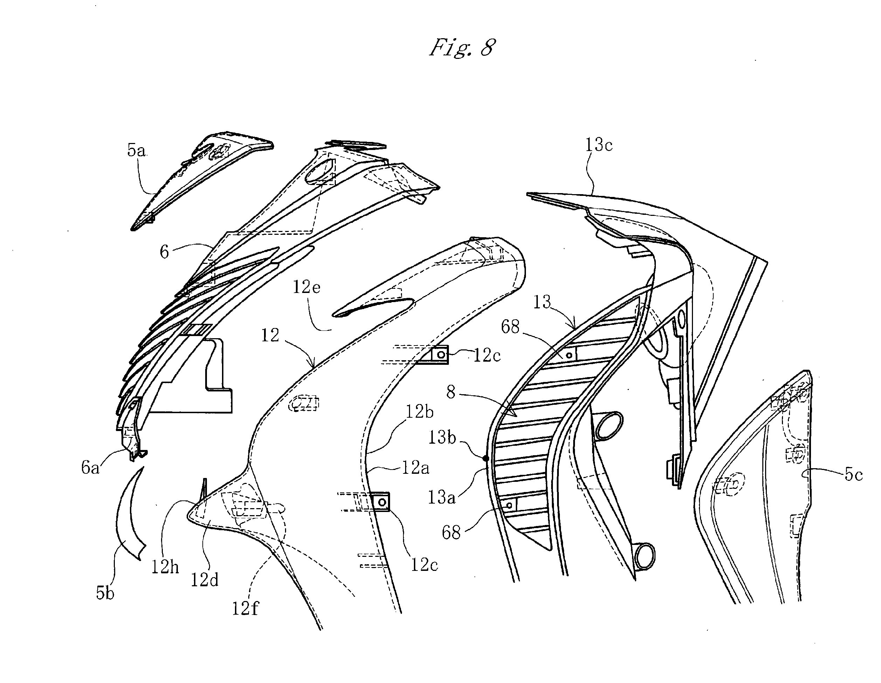

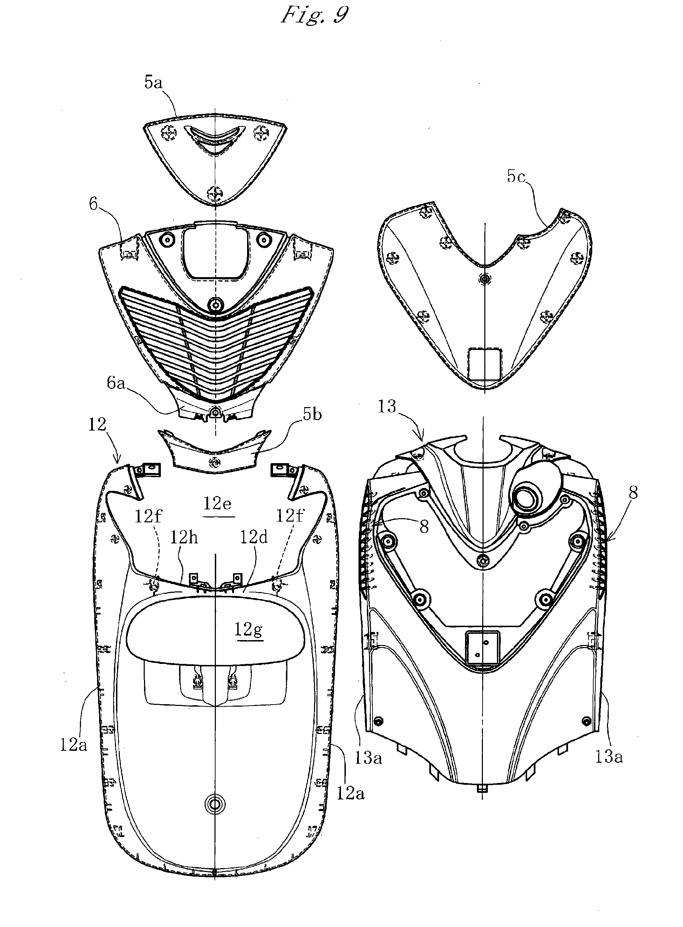

Fig. 8 shows shapes of side surfaces of respective constitutional parts of the front vehicle-body cover 5 in an exploded manner, and Fig. 9 shows a front shape and a back shape of the front vehicle-body cover 5. In these drawings, an upper front surface of the front cover 12 is covered with the front louver 6, and an upper front surface of the front louver 6 is covered with a front upper cover 5a. A center lower portion 6a of the front louver 6 is engaged with a front nose 12d and is abutted to a mating portion 12h, and the center lower portion 6a is covered with a grill cover 5b. The front winker 7 is housed in a space surrounded by the grill cover 5b, the front louver 6 and the front cover 12, and a periphery of the front winker 7 is supported on the grill cover 5b, the front louver 6 and the front cover 12.

An opening portion formed in an upper portion of the leg shield is covered with a leg shield upper cover 5c having an approximately heart shape.

Respective lateral edge portions 12a, 13a of the front cover 12 and the leg shield 13 respectively have the same shape as viewed in a side view as well as in a front view, and the front cover 12 and the leg shield 13 are configured to overlap with each other in the longitudinal direction. With respect to shapes of the respective left and right edge portions 12a, 13a as viewed in a side view, projections 12c, 12c project rearward with a front most portion 12b sandwiched therebetween, and overlap with the inside of mounting portions 68, 68 formed inside the air discharge opening 8 and are joined to the mounting portions 68, 68 using bolts (not shown in the drawing) . The mounting portions 68, 68 are arranged vertically in a state that a most front portion 13b of the lateral edge portion 13a is sandwiched between the mounting portions 68, 68 as viewed in a side view sandwiched therebetween.

A front end periphery of an umbrella-shaped portion 13c formed on an upper portion of the leg shield 13 is connected with respective upper end peripheries of the front upper cover 5a, the front louver 6 and the front cover 12. The front louver 6 is positioned substantially at the same height as the air discharge opening 8, and introduces traveling air which passes the front louver 6 into the radiator 38 which is positioned inside the upper opening 12e. The front nose portion 12d projects frontward and forms a laterally connected bridge, and engaging projections 12f which project rearward at two portions, that is, left and right portions are formed on left and right sides of the bridge portion. By engaging the engaging projecting portions 12f with the stay 42 (see Fig. 5), the front cover 12 is supported on the head pipe 33 side at two portions, that is, the left and right portions.

Numeral 12g indicates an opening portion formed in a lower portion of the front nose portion 12d, and the front fork 4 is inserted into and rotatably arranged in the opening portion.

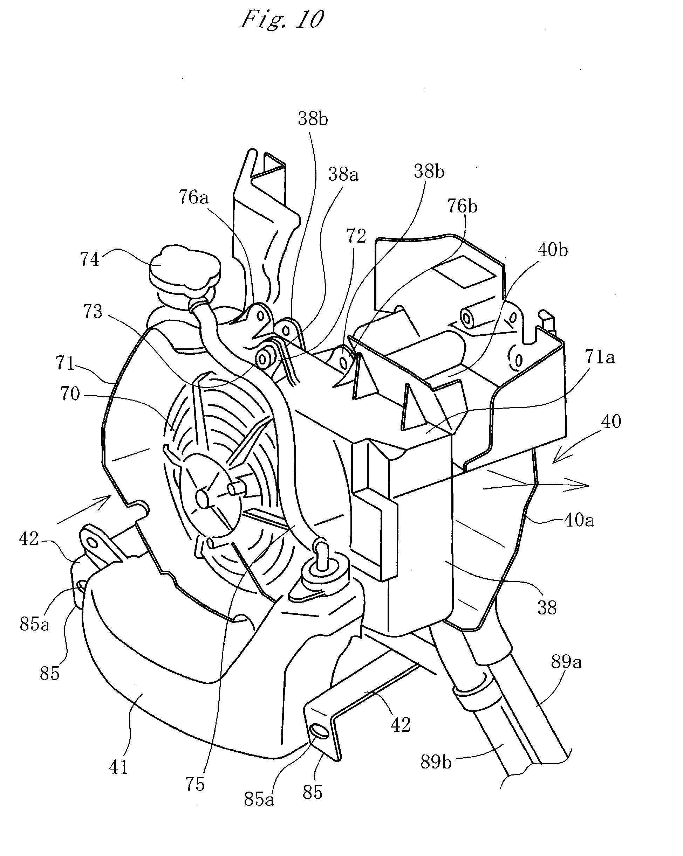

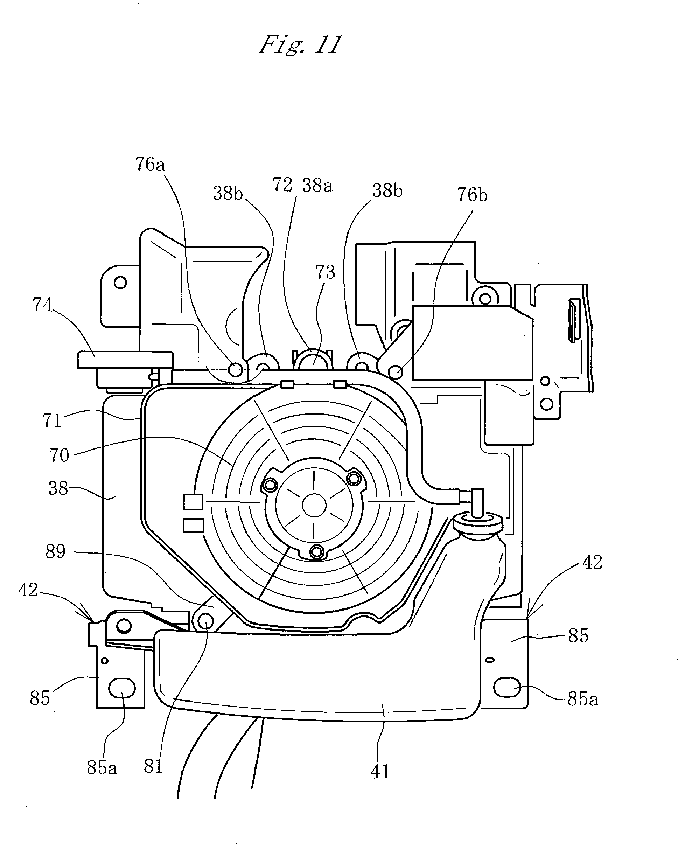

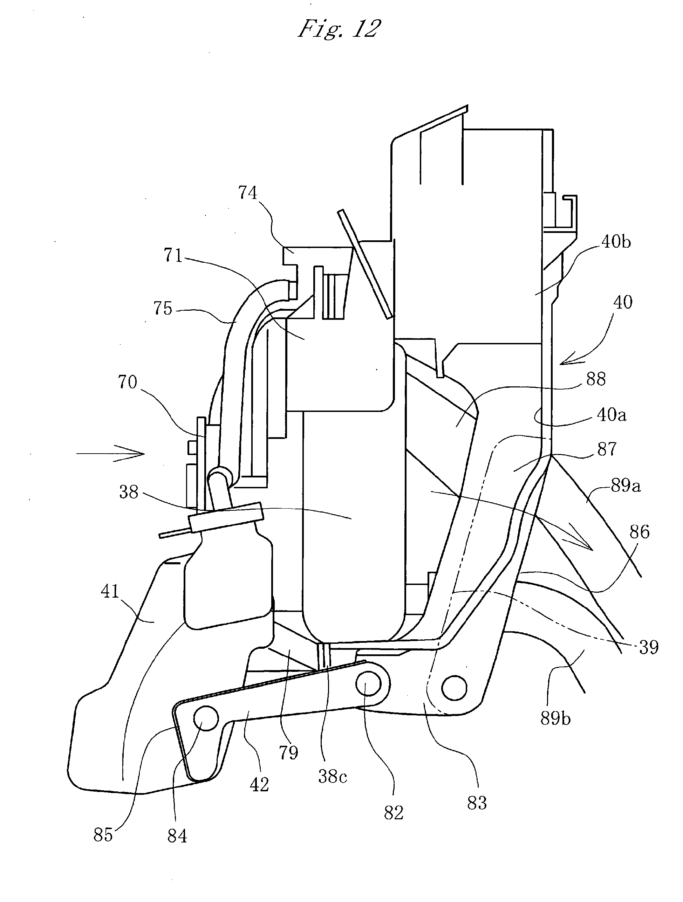

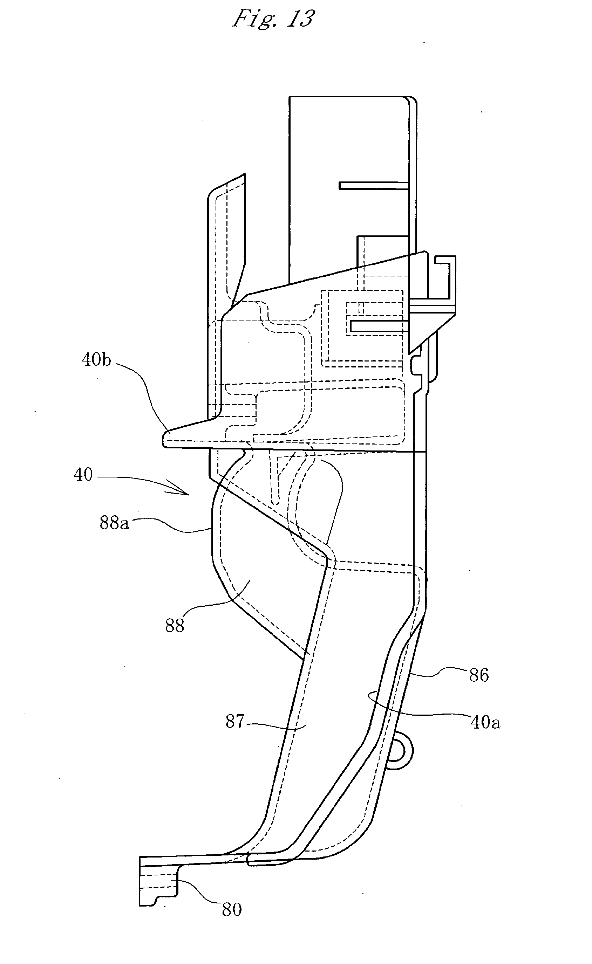

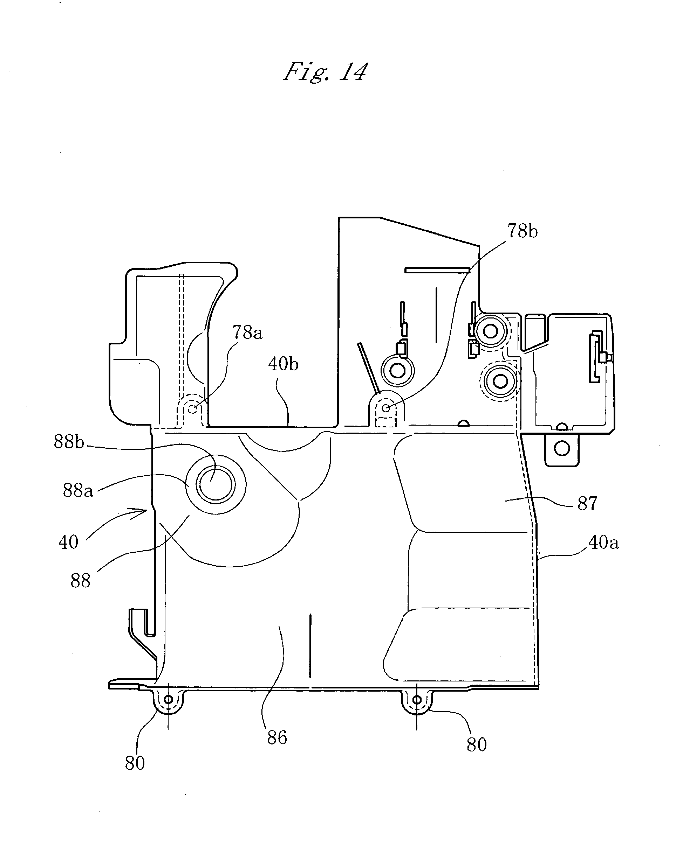

Next, the surrounding of the radiator is explained. Fig. 10 is a perspective view showing the radiator 38 and members surrounding the radiator 38. Fig. 11 is a front view of these parts, Fig. 12 is a side view of these parts, Fig. 13 is a side view of the air discharge guide 40, and Fig. 14 is a front view of the air discharge guide 40.

In these drawings, a cooling fan 70 is mounted on a front surface of the radiator 38, and a periphery of the cooling fan 70 is surrounded by a radiator shroud 71. The radiator shroud 71 is mounted such that a mounting projecting portion 72 which is formed on a center portion of an upper portion 71a is mounted on a boss 38a which is mounted on a center portion of an upper surface of the radiator 38 in a projecting manner using a bolt 73. Bosses 38b are formed on an upper portion of the radiator 38 on left and right sides in the vicinity of the boss 38a, and these bosses 38b are mounted on brackets formed on the stay 36. On a lower portion of a front surface of the radiator 38, the laterally elongated reserve tank 41 is arranged in the vehicle-width direction. The reserve tank 41 and a filling port 74 of the radiator 38 are communicated with each other by a hose 75 which is bent along the periphery of the cooling fan 70.

On the upper portion 71a of the radiator shroud 71, mounting portions 76a, 76b are formed at further left and right sides of the boss 38a (see Fig. 10, Fig. 11), and the mounting portions 76a, 76b are mounted on nut portions 78a, 78b (Fig. 14) formed on an upper portion 40b of the air discharge guide 40 using bolts (not shown in the drawing) . Mounting portions 79, 80 are also formed on respective lower portions of the radiator shroud 71 and the air discharge guide 40 at corresponding positions, and the mounting portions 79, 80 are fastened together using a bolt 81 (see Fig. 11) with a mounting portion 38c formed on a lower portion of the radiator 38 sandwiched therebetween.

The reserve tank 41 is supported on the stay 42. The stay 42 has a rear end thereof welded to an elongated transverse bar 82 which is arranged in the vehicle-width direction, and a bracket 83 which is welded to an intermediate portion of the transverse bar 82 extends rearward and is mounted on the bracket 39 of the head pipe 33 (Fig. 5) thus supporting the stay 42 on the head pipe 33. A side surface of the reserve tank 41 is mounted on a front end portion of the stay 42 by a bolt 84. A front end 85 of the stay 42 is bent downwardly, and a mounting hole 85a for mounting the front cover 12 is formed in the front end 85.

The air discharge guide 40 is arranged on a back surface side of the radiator 38, and is integrally formed with the radiator 38 by fastening using a bolt. The air discharge guide 40 has an approximately U shape as viewed in a side view, a back surface 86 of the air discharge guide 40 is arranged in a spaced-apart manner rearward from the radiator 38. As shown in Fig. 13 and Fig. 14, a lateral portion of the back surface 86 forms a guide surface 87 which is inclined rearward thus allowing warmed discharge air which passes the radiator 38 to flow toward the outside along the guide surface 87.

A bulging portion 88 which projects frontward is formed on a portion (a left upper corner portion in this example) of the back surface 86, a hose hole 88b is formed in a crest portion 88a of the bulging portion 88, and an upper hose 89a extends rearward through the hose hole 88b. Symbol 89b indicates a lower hose and extends downwardly together with the upper hose 89a.

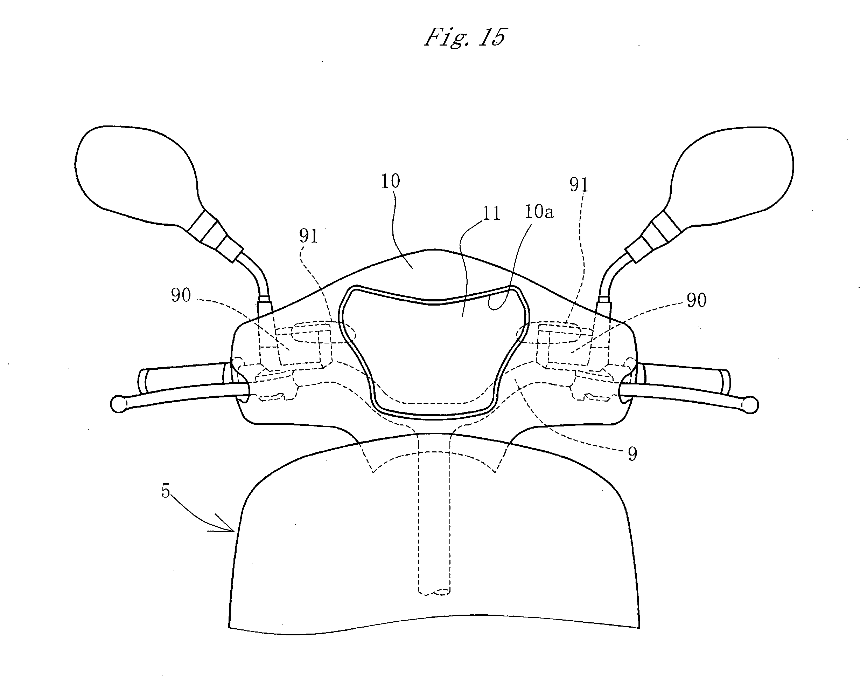

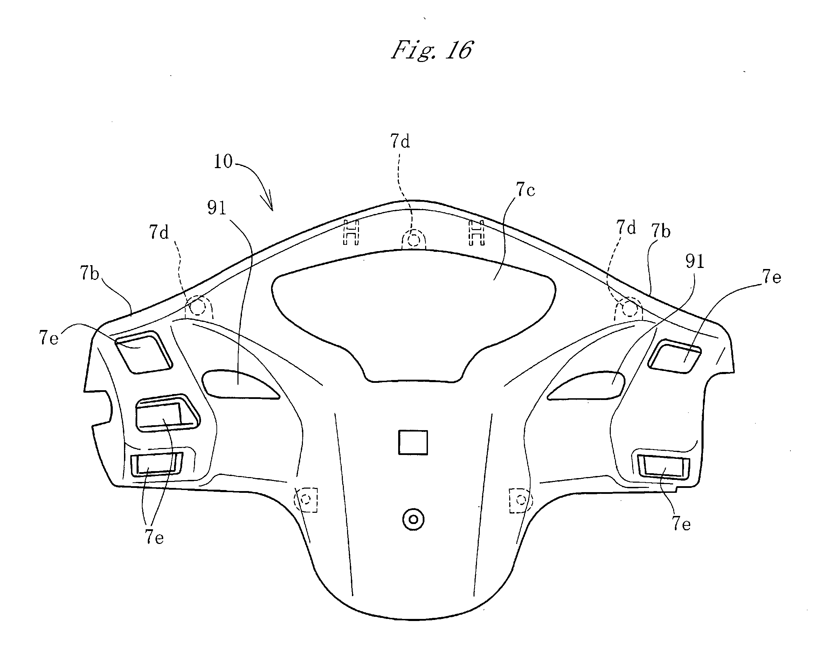

Next, aiming (optical axis adjustment) of the head light 11 is explained. Fig. 15 is a view showing the head light 11 portion from a front side, and Fig. 16 is a view showing the handle cover 10 from a rear side.

In these drawings, the head light 11 is housed in a head light opening 10a formed in a laterally center portion of the handle cover 10, and is positioned substantially above the handle 9. Master cylinders 90 of a brake mounted on the handle 9 are positioned at left and right sides of the head light 11.

As can be understood from Fig. 16, brake-liquid residual-quantity confirmation windows 91 are provided to left and right sides of a back surface (a side facing a rider) of the handle cover 10. The residual-quantity confirmation window 91 is provided at a position where the residual-quantity confirmation window 91 overlaps with the master cylinder 90 and hence, the rider can confirm a brake liquid residual quantity of the master cylinder 90 through the residual-quantity confirmation windows 91. The residual-quantity confirmation windows 91 also function as aiming adjustment windows through which an adjustment tool (screw driver) is inserted at the time of performing the aiming adjustment described later.

Numeral 7b indicates an arm portion which extends leftward and rightward from a center portion where a meter hole 7c is formed, and the arm portions 7b cover portions of the handle 9 which extends leftward and rightward. A display part of a meter (not shown in the drawing) is mounted to the meter hole 7c. Numeral 7d indicates a mounting boss of the head light, and symbol 7e indicates a button hole for a group of various switches.

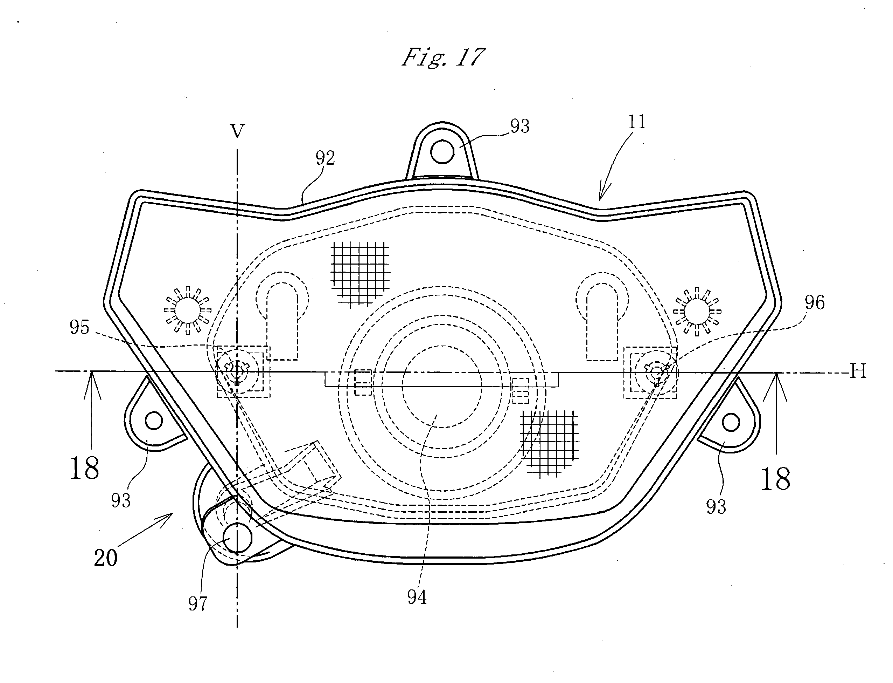

Fig. 17 is a front view of the head light 11. An outer periphery of the head light 11 forms a case 92, mounting portions 93 are formed on a periphery of the case 92 in a projecting manner, and the mounting portions 93 are mounted on the mounting bosses 7d of the handle cover 11 (Fig. 16) respectively using small bolts and hence, the head light 11 can be supported on the handle cover 10.

A bulb 94 is positioned at the center of the head light 11, and an optical axis adjustment fulcrum portion 95 and a first optical axis adjustment portion 96 are provided on left and right sides of the bulb 94. The optical axis adjustment fulcrum portion 95 and the first optical axis adjustment portion 96 respectively constitute support portions for supporting a reflector described later on the case 92, and are positioned on a horizontal line H which passes the respective centers of these portions 95, 96. The optical axis adjustment fulcrum portion 95 constitutes the center of rotation at the time of performing the optical axis adjustment, and the first optical axis adjustment portion 96 constitutes an optical axis adjustment axis in the horizontal direction which is operated from a rear side through the residual quantity confirmation window 91. Further, a second optical adjustment portion 97 for adjustment in the vertical direction is positioned below the optical axis adjustment fulcrumportion 95 and on a vertical line V which passes the center of the optical axis adjustment fulcrum portion 95. The second optical axis adjustment portion 97 can be adjusted form a front side.

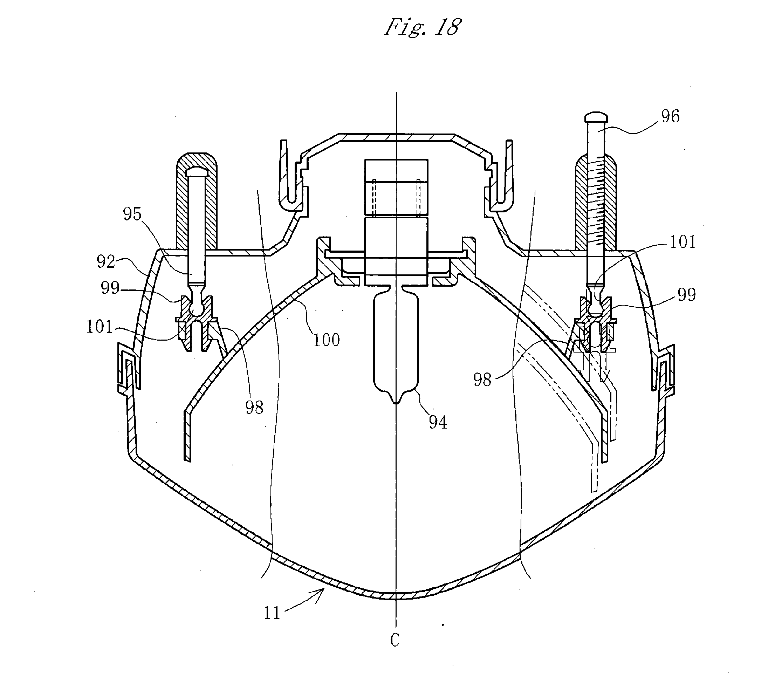

Fig. 18 is a transverse cross-sectional view taken along a line 18-18 of the head light 11 that is the horizontal line H in Fig. 17. The bulb 94 is mounted on the reflector 100 in the inside of the case 92, and is integrally rotated with the rotation of the reflector 100. On a back surface of the reflector 100, arm-shaped connecting arms 98 are mounted in a projecting manner in three directions, that is, in the directions toward the optical axis adjustment fulcrum portion 95, the first optical axis adjustment portion 96 and the second optical axis adjustment portion 97, and a spherical recessed portion 99 is formed in respective distal end portions of the connecting arms 98. The optical axis adjustment fulcrum portion 95, the first optical axis adjustment portion 96 and the second optical axis adjustment portion 97 respectively include a shaft portion and a spherical portion 101 which is formed on a distal end portion of the shaft portion, wherein each spherical portion 101 is fitted into the spherical recessed portion 99 thus joining the respective parts 95, 96 and 97 to the connecting arms 98 by a ball joint. Due to such constitution, each connecting arm 98 can be moved in the free direction relative to each spherical portion 101.

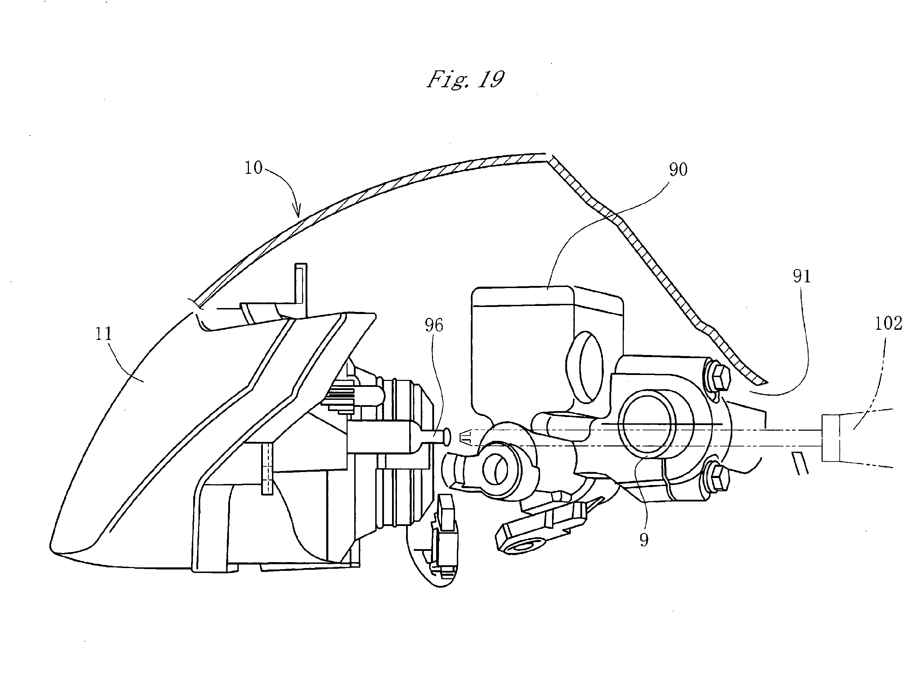

The optical axis adjustment fulcrum portion 95 is fixed to the case 92, and the first optical axis adjustment portion 96 is movable relative to the case 92 in a reciprocating manner. Accordingly, by reciprocating the first optical axis adjustment portion 96 using an adjustment tool 102 (Fig. 19), the reflector 100 can be tilted in a horizontal plane relative to the center of the spherical portion 101 of the optical axis adjustment fulcrum portion 95 as indicated by an imaginary line thus enabling the adjustment of an angle of an optical axis C in the lateral direction.

Fig. 19 shows this aiming adjustment, wherein a distal end of the adjustment tool 102 is inserted through the residual-quantity confirmation windows 91 arranged on a rear side so as to adjust the first optical axis adjustment portion 96. Due to such constitution, the residual-quantity confirmation windows 91 for confirming a residual quantity of liquid in the master cylinder 90 can be also used as the aiming adjustment window so that the number of openings can be reduced.

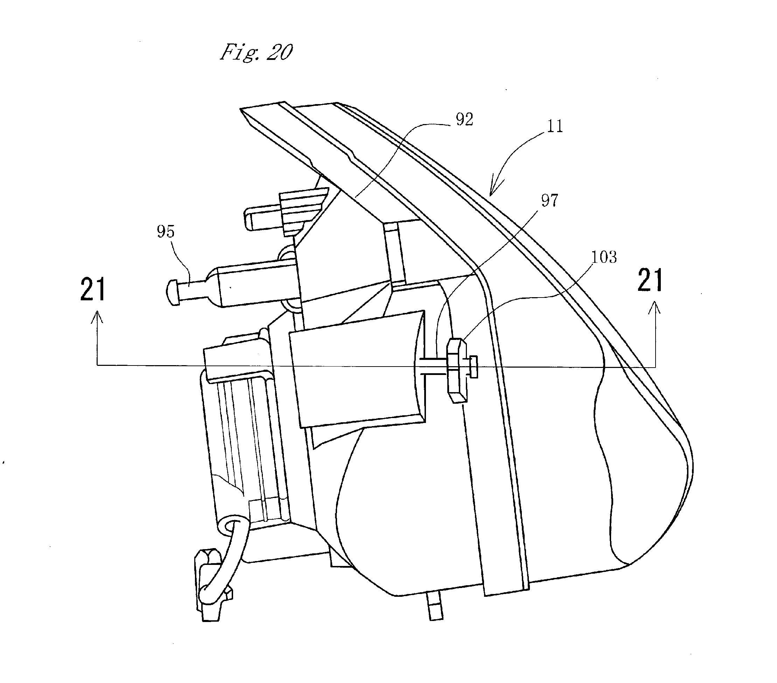

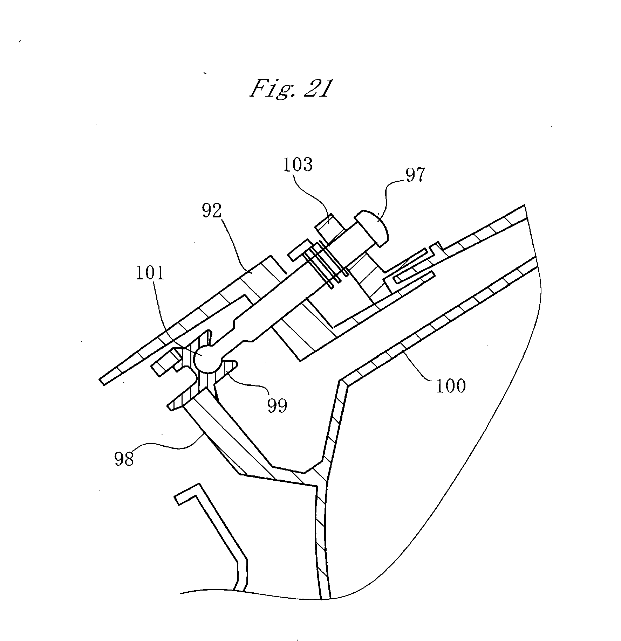

Fig. 20 is a view as viewed in the direction indicated by an arrow 20 in Fig. 17, and Fig. 21 is a cross-sectional view taken along a line 21-21 in Fig. 20 and shows the second optical axis adjustment portion 97.

The second optical axis adjustment portion 97 is joined by a screw to a projecting portion 103 which projects from a lower portion of the case 92 in a freely reciprocating manner. A distal end side which passes the projecting portion 103 enters the inside of the case 92 and, as shown in Fig. 21, the spherical portion 101 formed on the distal end of the second optical axis adjustment portion 97 is rotatably joined to the spherical recessed portion 99 formed in the connecting arm 98 which is integrally formed with the reflector 100 in a projecting manner.

Accordingly, by reciprocating the second optical axis adjustment portion 97 using the adjustment tool 102, the spherical recessed portion 99 is reciprocated together with the spherical portion 101. Here, as shown in Fig. 17, since the second optical axis adjustment portion 97 is on the vertical line V of the optical axis adjustment fulcrum portion 95, the second optical axis adjustment portion 97 is tilted around the horizontal line H described in Fig. 17 using the respective spherical portions 101 of the optical axis adjustment fulcrum portion 95 and the first optical axis adjustment portion 96 as the center of tilting.

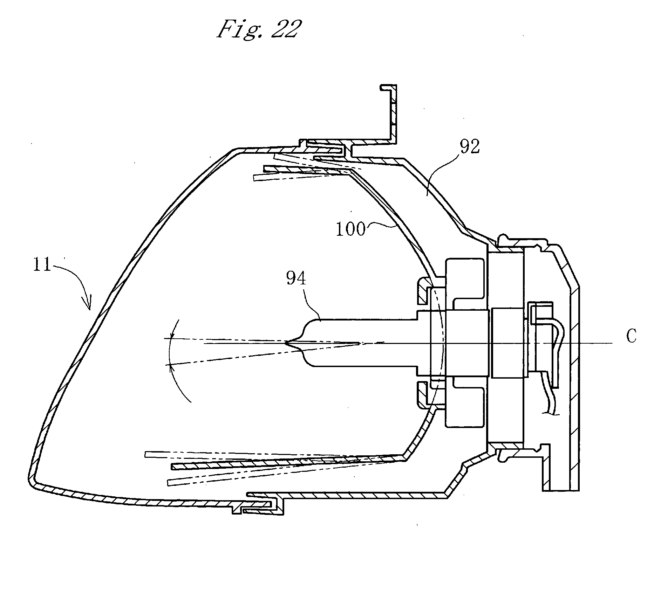

Accordingly, as shown in Fig. 22, the bulb 94 is tilted in the vertical direction together with the reflector 100 thus enabling the adjustment of the angle of the optical axis C in the vertical direction.

In this manner, according to this aiming adjustment structure, the aiming adjustment can be freely performed in the vertical direction as well as in the lateral direction and, at the same time, the aiming adjustment can be performed from a front side and a rear side.

The second optical axis adjustment portion 97 may be adjusted from a side behind the handle cover 11. Also in this case, the aiming adjustment window may be formed on a back surface side of the handle cover 11.

## Claims

1. A scooter-type vehicle having an air guide structure comprising:
a front vehicle-body cover (5) including a front cover (12) which covers a head pipe (33) from a front side; and
a radiator (38) which is housed in the inside of the front vehicle-body cover (5) and is arranged in front of the head pipe (33), an air intake opening (6) being formed in a radiator front portion of the front cover (12), and an air discharge opening (8) for discharging warmed discharge air produced by cooling the radiator (38) being formed in left and right sides of a portion of the front vehicle-body cover (5) which covers a rear side of the radiator (38),
the air discharge openings (8) are formed in a downward elongated shape, and at least an upper portion(61b) of a rear edge (61) of the air discharge openings (8) is positioned to be substantially parallel to an axis of the head pipe (33) and along a front edge of the head pipe (33),
wherein the upper portion (60b, 61b) and a lower portion (60c, 61c) of a front edge (60) and the rear edge (61) of the air discharge openings (8) are connected with each other in a curved shape,
wherein the scooter-type vehicle includes a seat (20) and a leg shield (13) which covers the legs (F) of a rider who sits on the seat (20) from the front side, the air discharge openings (8) are formed in the leg shield (13) and are arranged at an approximately equal height as an upper surface of the seat (20), and a back surface side of the leg shield (13) is formed in a frontward recessed shape along the air discharge openings (8)as viewed in a side view,
**characterized in that**
the air discharge openings (8) are arranged such that
at least a portion of the front edge of the air discharge openings (8) overlaps with the radiator (38) as viewed in the side view, and the front edge of the air discharge openings (8) which is positioned above the portion of the front edge of the air discharge openings (8) which overlaps with the radiator (38) extends with gentle inclination with respect to a longitudinal direction of the radiator (38) such that the front edge (60) is directed obliquely in a rearward and upward direction as viewed in the side view,
the front edges (60) and the rear edges (61) of the air discharge openings (8) below the portion of the air dischargeopenings (8) which overlaps with the radiator (38) are inclined obliquely in a rearward and downward direction.

2. The scooter-type vehicle having the air guide structure according to claim 1, wherein the upper portion and the lower portion of the rear edge of the air discharge openings (8) overlap with the head pipe (3) as viewed in the side view.

3. The scooter-type vehicle having the air guide structure according to any one of claims 1 or 2, wherein a louver (64) which includes a plurality of blades (65) extending in a longitudinal direction of the vehicle is mounted in each air discharge opening (8), and a wall thickness of each blade (65) is set to a small value on an inner side thereof, and increased on an outer side thereof.

## Patentansprüche

1. Fahrzeug vom Motorrollertyp mit einer Luftführungsstruktur, umfassend:
eine vordere Fahrzeugkörperabdeckung (5), umfassend eine vordere Abdeckung (12), die ein Kopfrohr (33) von einer Vorderseite abdeckt; und
einen Radiator (38), der im Inneren der vorderen Fahrzeugkörperabdeckung (5) untergebracht und vor dem Kopfrohr (33) angeordnet ist, wobei eine Lufteinlassöffnung (6) in einem vorderen Radiatorbereich der vorderen Abdeckung (12) gebildet ist, und wobei eine Luftauslassöffnung (8) zum Auslassen erwärmter Auslassluft, die durch Kühlen des Radiators (38) erzeugt ist, an linken und rechten Seiten eines Bereichs der vorderen Fahrzeugkörperabdeckung (5) gebildet ist, der eine hintere Seite des Radiators (38) abdeckt,
wobei die Luftauslassöffnungen (8) in einer nach unten länglichen Gestalt gebildet sind, und wobei wenigstens ein oberer Bereich (61 b) eines hinteren Rands (61) der Luftauslassöffnungen (8) derart positioniert ist, dass er im Wesentlichen parallel zu einer Achse des Kopfrohrs (33) und entlang eines vorderen Rands des Kopfrohrs (33) verläuft,
wobei der obere Bereich (60b, 61b) und ein unterer Bereich (60c, 61c) eines vorderen Rands (60) und des hinteren Rands (61) der Luftauslassöffnungen (8) in einer gekrümmten Gestalt miteinander verbunden sind,
wobei das Fahrzeug vom Motorrollertyp einen Sitz (20) sowie ein Beinschild (13) umfasst, das die Beine (F) eines auf dem Sitz (20) sitzenden Fahrers von der vorderen Seite her abdeckt, wobei die Luftauslassöffnungen (8) in dem Beinschild (13) gebildet und ungefähr in der gleichen Höhe angeordnet sind wie eine obere Fläche des Sitzes (20), und wobei eine Rückflächenseite des Beinschilds (13) bei Betrachtung in einer Seitenansicht in einer nach vorne mit Aussparungen versehenen Gestalt entlang der Luftauslassöffnungen (8) gebildet ist,
**dadurch gekennzeichnet, dass**
die Luftauslassöffnungen (8) derart angeordnet sind, dass wenigstens ein Bereich des vorderen Rands der Luftauslassöffnungen (8) bei Betrachtung in der Seitenansicht mit dem Radiator (38) überlappt, und der vordere Rand der Luftauslassöffnungen (8), der über dem Bereich des vorderen Rands der Luftauslassöffnungen (8) positioniert ist, der mit dem Radiator (38) überlappt, sich mit einer sanften Neigung relativ zu einer Längsrichtung des Radiators (38) derart erstreckt, dass der vordere Rand (60) bei Betrachtung in der Seitenansicht in einer Richtung nach hinten und aufwärts schräg ausgerichtet ist,
wobei die vorderen Ränder (60) und die hinteren Ränder (61) der Luftauslassöffnungen (8) unter dem Bereich der Luftauslassöffnungen (8), der mit dem Radiator (38) überlappt, schräg in einer Richtung nach hinten und abwärts geneigt sind.

2. Fahrzeug vom Motorrollertyp mit Luftführungsstruktur nach Anspruch 1, wobei der obere Bereich und der untere Bereich des hinteren Rands der Luftauslassöffnungen (8) bei Betrachtung in der Seitenansicht mit dem Kopfrohr (3) überlappen.

3. Fahrzeug vom Motorrollertyp mit Luftführungsstruktur nach einem der Ansprüche 1 oder 2, wobei eine Lüftungsöffnung (64), die eine Mehrzahl von Lamellen (65) umfasst, die sich in einer Längsrichtung des Fahrzeugs erstrecken, in jeder Luftauslassöffnung (8) montiert ist, und wobei eine Wandstärke jeder Lamelle (65) an einer Innenseite derselben auf einen kleinen Wert eingestellt ist und an einer Außenseite derselben zunimmt.

## Revendications

1. Véhicule de type scooter ayant une structure de guidage d'air comprenant :
un carénage avant (5) de cadre de véhicule, comprenant un carénage avant (12) qui recouvre un tube de direction (33) d'un côté avant ; et
un radiateur (38) qui est logé à l'intérieur du carénage avant (5) de cadre de véhicule et est agencé devant le tube de direction (33), une ouverture d'admission d'air (6) étant formée dans une partie devant le radiateur du carénage avant (12), et une ouverture de décharge d'air (8) pour décharger l'air de décharge chauffé, produit en refroidissant le radiateur (38), étant formée dans des côtés gauche et droit d'une partie du carénage avant (5) de cadre de véhicule, qui recouvre un côté arrière du radiateur (38),
les ouvertures de décharge d'air (8) sont formées selon une forme allongée vers le bas, et au moins une partie supérieure (61b) d'un bord arrière (61) des ouvertures de décharge d'air (8) est positionnée pour être sensiblement parallèle à un axe du tube de direction (33) et le long d'un bord avant du tube de direction (33),
dans lequel la partie supérieure (60b, 61b) et une partie inférieure (60c, 61c) d'un bord avant (60) et du bord arrière (61) des ouvertures de décharge d'air (8) sont raccordées entre elles selon une forme incurvée,
dans lequel le véhicule de type scooter comprend un siège (20) et un dispositif de protection de jambes (13) qui recouvre du côté avant les jambes (F) d'un motocycliste qui s'assoit sur le siège (20), les ouvertures de décharge d'air (8) sont formées dans le dispositif de protection de jambes (13) et sont agencées à une hauteur approximativement égale à une surface supérieure du siège (20), et un côté de surface arrière du dispositif de protection de jambes (13) est formé selon une forme évidée vers l'avant le long des ouvertures de décharge d'air (8), selon une vue latérale,
**caractérisé en ce que** :
les ouvertures de décharge d'air (8) sont agencées de sorte qu'au moins une partie du bord avant des ouvertures de décharge d'air (8) chevauche le radiateur (38) selon la vue latérale, et le bord avant des ouvertures de décharge d'air (8), qui est positionné au-dessus de la partie du bord avant des ouvertures de décharge d'air (8) qui chevauche le radiateur (38), s'étend avec une légère inclinaison par rapport à une direction longitudinale du radiateur (38) de sorte que le bord avant (60) est dirigé de manière oblique dans une direction vers l'arrière et ascendante, selon la vue latérale,
les bords avant (60) et les bords arrière (61) des ouvertures de décharge d'air (8) sous la partie des ouvertures de décharge d'air (8) qui chevauche le radiateur (38), sont inclinés de manière oblique dans une direction vers l'arrière et descendante.

2. Véhicule de type scooter ayant la structure de guidage d'air selon la revendication 1, dans lequel la partie supérieure et la partie inférieure du bord arrière des ouvertures de décharge d'air (8) chevauchent le tube de direction (3), selon la vue latérale.

3. Véhicule de type scooter ayant la structure de guidage d'air selon l'une quelconque des revendications 1 ou 2, dans lequel un déflecteur (64) qui comprend une pluralité d'aubes (65) s'étendant dans une direction longitudinale du véhicule, est monté dans chaque ouverture de décharge d'air (8), et une épaisseur de paroi de chaque aube (65) est conçue à une petite valeur à son côté interne, et augmentée à son côté externe.
